# EUROPEAN PATENT APPLICATION

(11) **EP 3 833 108 A1**
(43) Date of publication of application: **09.06.2021**
(21) Application number: 18928508.3
(22) Date of filing: 01.08.2018
(51) Int. Cl.: H04W 48/10, H04W 56/00

(54) **COMMUNICATION METHOD, DEVICE AND SYSTEM**

(71) Applicant: SZ DJI Technology Co., Ltd., Shenzhen, Guangdong 518057 (CN)
(72) Inventor: YANG, Xiaoyuan, Shenzhen, Guangdong 518057 (CN); ZOU, Xu, Shenzhen, Guangdong 518057 (CN); WAN, Ridong, Shenzhen, Guangdong 518057 (CN)
(74) Representative: Goddar, Heinz J.
(86) International application number: PCT/CN2018/097996
(87) International publication number: WO 2020/024139

(57) **Abstract**

A communication method, apparatus, and system. The methods includes: when it is determined that target data needs to be sent to a first secondary control terminal that has already established a communication connection with the primary control terminal, generating secondary control terminal data, which includes an identifier of the first secondary control terminal and the target data (201); in a process of broadcasting synchronization data, broadcasting the secondary control terminal data, where the synchronization data includes an identifier of the primary control terminal (202). The present disclosure improves real-time performance for a secondary control terminal to establish a communication connection with the primary control terminal.

## Description

### TECHNICAL FIELD

The present disclosure relates to the technical field of communication and, more particularly, to a communication method, a communication apparatus, and a communication system.

### BACKGROUND

Currently, a same controlled device may be controlled by multiple control terminals. The multiple control terminals may include one primary control terminal and one or more secondary control terminals. The primary control terminal establishes communication connections with the controlled device and the secondary control terminals. The secondary control terminals communicate with the controlled device through the primary control terminal.

In the existing technology, before the primary control terminal establishes the communication connection with the secondary control terminal, the primary control terminal switches its operation state from state 1 to state 2. When the operation state of the primary control device is in state 1, the primary control terminal may transmit data to the secondary control terminal through the established communication connection. When the operation state of the control terminal is in state 2, the primary control terminal broadcasts synchronization data, and no longer transmits the data to the secondary control terminal through the established communication connection. The secondary control terminal may establish the communication connection with the primary control terminal through searching for the synchronization data.

Therefore, in the existing technology, there exists a problem that the secondary control terminal is unable to establish the communication connection with the primary control terminal in real time.

### SUMMARY

The present disclosure provides a communication method, apparatus, and system for solving the problem in the existing technology that a secondary control terminal is unable to establish a communication connection with a primary control terminal in real time.

In accordance with the disclosure, there is provided a communication method applied to a primary control terminal. The method includes:
when it is determined that target data needs to be sent to a first secondary control terminal that has already established a communication connection with the primary control terminal, generating secondary control terminal data, which includes an identifier of the first secondary control terminal and the target data;
in a process of broadcasting synchronization data, broadcasting the secondary control terminal data, where the synchronization data includes an identifier of the primary control terminal.

Also in accordance with the disclosure, there is provided a communication method applied to a first secondary control terminal. The method includes:
receiving broadcast data from a primary control terminal;
when the broadcast data includes secondary control terminal data, determining whether the secondary control terminal data includes an identifier of the first secondary control terminal;
if the secondary control terminal data includes the identifier of the first secondary control terminal, performing subsequent processing on the secondary control terminal data.

Also in accordance with the disclosure, there is provided a communication method applied to a second secondary control terminal. The method includes:
searching for synchronization data;
after the synchronization data from a primary control terminal is found, and the synchronization data includes an identifier of the primary control terminal, adding the identifier of the primary control terminal to a terminal list, which is used to display to a user the primary control terminal with which a communication connection can be established.

Also in accordance with the disclosure, there is provided a communication method. The method includes:
when it is determined that target data needs to be sent to a first secondary control terminal that has already established a communication connection with a primary control terminal, generating, by the primary control terminal, secondary control terminal data, which includes an identifier of the first secondary control terminal and the target data;
in a process of broadcasting synchronization data, broadcasting, by the primary control terminal, the secondary control terminal data, where the synchronization data includes an identifier of the primary control terminal;
receiving, by the first secondary control terminal, the broadcast data from the primary control terminal;
when the broadcast data includes secondary control terminal data, determining, by the first secondary control terminal, whether the secondary control terminal data includes an identifier of the first secondary control terminal;
if the secondary control terminal data includes the identifier of the first secondary control terminal, performing, by the first secondary control terminal, subsequent processing on the secondary control terminal data;
searching for synchronization data by a second secondary control terminal that has not established a communication connection with the primary control terminal;
after the synchronization data from the primary control terminal is found, and the synchronization data includes an identifier of the primary control terminal, adding, by the second secondary control terminal, the identifier of the primary control terminal to a terminal list, which is used to display to a user the primary control terminal with which the communication connection can be established.

Also in accordance with the disclosure, there is provided a communication apparatus applied to a primary control terminal. The apparatus includes:
a processor configured to, when it is determined that target data needs to be sent to a first secondary control terminal that has already established a communication connection with the primary control terminal, generate secondary control terminal data, which includes an identifier of the first secondary control terminal and the target data;
a transmitter configured to, in a process of broadcasting synchronization data, broadcast the secondary control terminal data, where the synchronization data includes an identifier of the primary control terminal.

Also in accordance with the disclosure, there is provided a communication apparatus applied to a first secondary control terminal. The apparatus includes a receiver and a processor.

The receiver is configured to receive broadcast data from a primary control terminal.

The processor is configured to, when the broadcast data includes secondary control terminal data, determine whether the secondary control terminal data includes an identifier of the first secondary control terminal.

If the secondary control terminal data includes the identifier of the first secondary control terminal, the processor is further configured to perform subsequent processing on the secondary control terminal data.

Also in accordance with the disclosure, there is provided a communication apparatus applied to a second secondary control terminal. The apparatus includes a receiver and a processor.

The receiver is configured to search for synchronization data.

The processor is configured to, after the synchronization data from a primary control terminal is found and the synchronization data includes an identifier of the primary control terminal, add the identifier of the primary control terminal to a terminal list, which is used to display to a user the primary control terminal with which a communication connection can be established.

Also in accordance with the disclosure, there is provided a communication system. The system includes a primary control terminal, a first secondary control terminal that has established a communication connection with the primary control terminal, and a second secondary control terminal that has not established a communication connection with the primary control terminal.

When it is determined that target data needs to be sent to a first secondary control terminal that has already established a communication connection with a primary control terminal, the primary control terminal generates secondary control terminal data, which includes an identifier of the first secondary control terminal and the target data.

In a process of broadcasting synchronization data, the primary control terminal broadcasts the secondary control terminal data, where the synchronization data includes an identifier of the primary control terminal.

The first secondary control terminal receives the broadcast data from the primary control terminal

When the broadcast data includes secondary control terminal data, the first secondary control terminal determines whether the secondary control terminal data includes an identifier of the first secondary control terminal.

If the secondary control terminal data includes the identifier of the first secondary control terminal, the first secondary control terminal performs subsequent processing on the secondary control terminal data.

The second secondary control terminal searches for synchronization data.

After the synchronization data from the primary control terminal is found, and the synchronization data includes an identifier of the primary control terminal, the second secondary control terminal adds the identifier of the primary control terminal to a terminal list, which is used to display to a user the primary control terminal with which the communication connection can be established.

According to the communication method, apparatus, and system provided by the present disclosure, when it is determined that the target data needs to be sent to the first secondary control terminal that has already established a communication connection, generating the secondary control terminal data, which includes the identifier of the first secondary control terminal and the target data; in a process of broadcasting the synchronization data, broadcasting the secondary control terminal data, such that in the process of broadcasting the synchronization data, the secondary control terminal data that needs to be sent to the first secondary control terminal is sent as the broadcast data to the first secondary control terminal, and the second secondary control terminal may establish the communication connection with the primary control terminal in real time according to the synchronization data broadcasted by the primary control terminal. Thus, the real-time performance for the secondary control terminal to establish the communication connection with the primary control terminal is improved.

### BRIEF DESCRIPTION OF THE DRAWINGS

To more clearly illustrate the technical solution of the present disclosure or the existing technology, the accompanying drawings used in the description of the disclosed embodiments or the existing technology are briefly described hereinafter. The drawings described below are merely some embodiments of the present disclosure. Other drawings may be derived from such drawings by a person with ordinary skill in the art without creative efforts and may be encompassed in the present disclosure.
FIG. 1 is a schematic diagram showing an application scenario of a communication method according to an example embodiment of the present disclosure.
FIG. 2 is a schematic flow chart of a communication method according to an example embodiment of the present disclosure.
FIG. 3 is a schematic flow chart of a communication method according to another example embodiment of the present disclosure.
FIG. 4 is a schematic flow chart of a communication method according to another example embodiment of the present disclosure.
FIG. 5 is a schematic flow chart of a communication method according to another example embodiment of the present disclosure.
FIG. 6 is a schematic diagram showing a communication method according to another example embodiment of the present disclosure.
FIG. 7 is a schematic flow chart of a communication method according to another example embodiment of the present disclosure.
FIG. 8 is a schematic structural diagram of a communication apparatus according to an example embodiment of the present disclosure.
FIG. 9 is a schematic structural diagram of a communication apparatus according to another example embodiment of the present disclosure.
FIG. 10 is a schematic structural diagram of a communication apparatus according to another example embodiment of the present disclosure.

### DETAILED DESCRIPTION OF THE EMBODIMENTS

To make objectives, technical solutions, and advantages of the embodiments of the present disclosure clearer, the technical solutions of the embodiments of the present disclosure will be described clearly and completely with reference to the accompanying drawings. It will be appreciated that the described embodiments are some rather than all of the embodiments of the present disclosure. Other embodiments obtained by those having ordinary skills in the art on the basis of the described embodiments without inventive efforts should fall within the scope of the present disclosure.

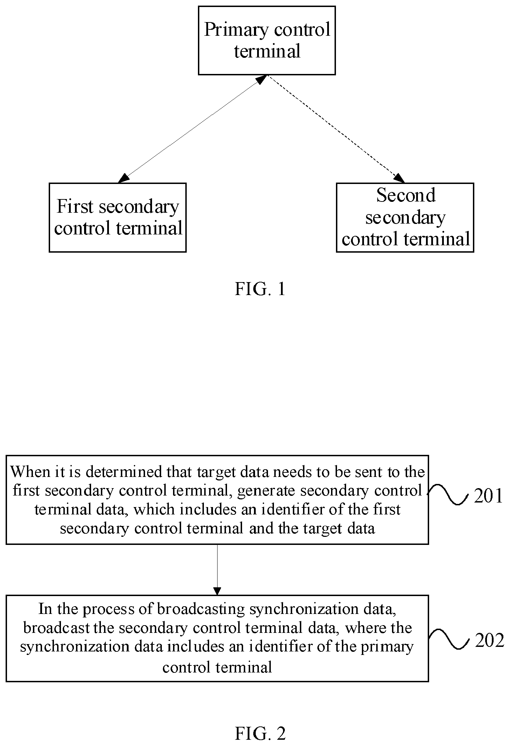

FIG. 1 is a schematic diagram showing an application scenario of a communication method according to an example embodiment of the present disclosure. As shown in FIG. 1, the application scenario includes: a primary control terminal 11, a first salve control terminal 12, and a second secondary control terminal 13. The first secondary control terminal 12 has already established a communication connection with the primary control terminal 11. The first secondary control terminal 12 may communicate with a controlled device through the primary control terminal 11, for example, sending a control command to the controlled device, or receiving data returned from the controlled device. The second secondary control terminal 13 has not established a communication connection with the primary control terminal 11. The second secondary control terminal 13 may not communicate with the controlled device through the primary control terminal 11. The second control terminal 13 may receive broadcast data sent by the primary control terminal 11. Optionally, the controlled device may be an unmanned aerial vehicle (UAV). Optionally, the primary control terminal 11 may include a primary remote controller of the UAV, and the first secondary control terminal 12 and the second secondary control terminal 13 both include the secondary remote controller of the UAV.

Further optionally, the primary control terminal 11 may also include: primary user equipment (UE). An application program (APP) of the primary UE may be used to control the UAV through the primary remote controller.

Further optionally, the first secondary control terminal 12 may also include: first secondary UE. The APP of the first secondary UE may be used to control the UAV through the first secondary remote controller.

Further optionally, the second secondary control terminal 13 may also include: second secondary UE. The APP of the second secondary UE may be used to control the UAV through the second secondary remote controller.

It should be noted that specific forms of the primary remote controller and the secondary remote controllers are not limited by the present disclosure. For example, the remote controllers may be remote controllers controlled by a joystick or may be remote controllers controlled by a combination of the joystick and a touch screen.

It should be noted that the first secondary control terminal may be any one of the secondary control terminals that have already established the communication connections with the primary control terminal. The second secondary control terminal may be any one of the secondary control terminals that have not established the communication connections with the primary control terminal and are expected to establish the communication connections with the primary control terminal by searching for synchronization data from the primary control terminal. The application scenario may include one or more primary control terminal.

Hereinafter, some embodiments of the present disclosure will be described in detail with reference to the accompanying drawings. In case of no conflict, the following embodiments and features in the embodiments may be combined with each other.

FIG. 2 is a schematic flow chart of a communication method according to an example embodiment of the present disclosure. The method of the embodiment of the present disclosure may be executed by the primary control terminal. As shown in FIG. 2, the method includes the following processes.

At 201, when it is determined that target data needs to be sent to the first secondary control terminal, secondary control terminal data is generated, which includes an identifier of the first secondary control terminal and the target data.

In this process, the first secondary control terminal has already established the communication connection with the primary control terminal. Specifically, the target data may be any data that needs to be sent to the first secondary control terminal, for example, video data, image data, voice data, and execution result, etc. that the controlled device sends to the first secondary control terminal.

The specific manner of identifying the first secondary control terminal is not limited by the present disclosure. For example, the identifier of the first secondary control terminal may be the device number of the first secondary control terminal. Optionally, to make a receiving terminal determine secondary control data corresponding to the target data before the target data is decoded, the identifier of the first secondary control terminal may be located before the target data in the secondary control terminal data. Further optionally, the identifier of the first secondary control terminal may be included in data header of the secondary control terminal data.

At 202, in the process of broadcasting the synchronization data, the secondary control terminal data is broadcasted, where the synchronization data includes the identifier of the primary control terminal.

In this process, the synchronization data may be used to for the second secondary control terminal to establish the communication connection with the primary control terminal. It should be noted that the specific content of the synchronization data is not limited by the present disclosure. In this case, although the secondary control terminal data is the data that needs to be sent to the first secondary control terminal, the data is sent to the first secondary control terminal through broadcast communication, rather than point-to-point communication. That is, the data is broadcast to all the secondary control terminals that have already established the communication connection with the primary control terminal (including the first secondary control terminal and other secondary control terminals excluding the first secondary control terminal). The data is also broadcast to the second secondary control terminal that has not established a communication connection with the primary control terminal, but is able to receive the broadcast data sent by the primary control terminal. The second secondary control terminal may receive the secondary control terminal data.

After the first secondary control terminal receives the secondary control terminal data, the first secondary control terminal may perform subsequent processing on the secondary control terminal data according to the identifier of the first secondary control terminal in the secondary control terminal data. After other secondary control terminals receive the secondary control terminal data, the other secondary control terminals may ignore the secondary control terminal data according to the identifier of the first secondary control terminal in the secondary control terminal data. After the second secondary control terminal receives the secondary control terminal data, because the secondary control terminal data is not the same as the synchronization data, the second secondary control terminal may not process any data other than the synchronization data and may ignore the secondary control terminal data.

Optionally, the synchronization data and the secondary control terminal data may be broadcasted in a same operation frequency band or in different operation frequency bands. Further optionally, when a communication circuit of the primary control terminal is a narrowband circuit, the synchronization data and the secondary control terminal data may be broadcasted in the same frequency band. When the communication circuit of the primary control terminal is a broadband circuit, the synchronization data and the secondary control terminal data may be broadcasted in different frequency bands. The narrowband circuit may operate in one operation frequency band and the broadband circuit may operate in multiple frequency bands.

In the process of broadcasting the synchronization data, the specific manner of broadcasting the secondary control terminal data is not limited by the present disclosure.

Optionally, the communication circuit of the primary control terminal is the narrowband circuit. In absence of the secondary control terminal data, the communication circuit broadcasts the synchronization data at the operation frequency band according to certain rules. In presence of the secondary control terminal data, the communication circuit suspends broadcasting the synchronization data at the operation frequency band at the time for broadcasting the synchronization data, and instead broadcasts the secondary control terminal data at the operation frequency band. After the secondary control terminal data is broadcasted once or multiple times, the communication circuit resumes to broadcast the synchronization data at the operation frequency band. Alternatively, in presence of the secondary control terminal data, the synchronization data and the secondary control terminal data are combined to obtain the combined data, and after the combined data is broadcasted at the operation frequency band once or multiple times at the time for broadcasting the synchronization data, the communication circuit resumes to broadcast the synchronization data at the operation frequency band.

Optionally, the communication circuit of the primary control terminal is the broadband circuit. In absence of the secondary control terminal data, the communication circuit broadcasts the synchronization data at a first operation frequency band according to the certain rules. In presence of the secondary control terminal data, the communication circuit broadcasts the synchronization data at the first operation frequency band according to the certain rules, and at the same time, sends the secondary control terminal data to the first secondary control terminal at a second operation frequency band.

It can be seen that the primary control terminal does not need to switch its operation state. In the process of broadcasting the synchronization data, the primary control terminal broadcasts the secondary control terminal data to the first secondary control terminal. Considering that multiple primary control terminals are constantly broadcasting the synchronization data, to facilitate the second secondary control terminal to distinguish different primary control terminals, the synchronization data may include the identifier of the primary control terminal. The specific manner of identifying the primary control terminal is not limited by the present disclosure. For example, the identifier of the primary control terminal may be the device number of the primary control terminal. It should be noted that the specific manner of identifying the first secondary control terminal may be the same as or different from the specific manner of identifying the primary control terminal, which is not limited by the present disclosure.

It should be noted that because the synchronization data and the secondary control terminal data are sent in the form of broadcast, both may be considered as broadcast data. That is, the broadcast data may include the synchronization data and the secondary control terminal data.

In one embodiment, after it is determined that the target data needs to be sent to the first secondary control terminal that has already established the communication connection with the primary control terminal, the secondary control terminal data including the identifier of the first secondary control terminal and the target data is generated. In the process of broadcasting the synchronization data, the secondary control terminal data is broadcasted. Sending the secondary control terminal data that needs to be sent to the first secondary control terminal as the broadcast data to the first secondary control terminal in the process of broadcasting the synchronization data is achieved, such that the second secondary control terminal may establish the communication connection with the primary control terminal in real time according to the synchronization data broadcasted by the primary control terminal, and the real-time performance for the secondary control terminal to establish the communication connection with the primary control terminal may be improved.

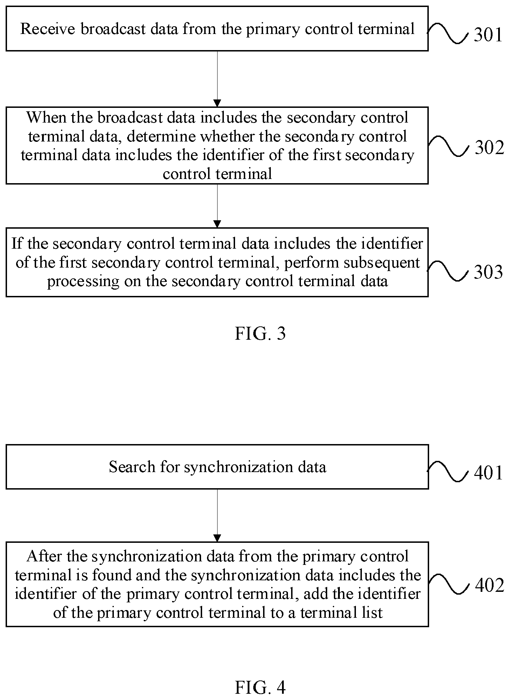

FIG. 3 is a schematic flow chart of a communication method according to another example embodiment of the present disclosure. The method of the embodiment of the present disclosure may be executed by the first secondary control terminal. As shown in FIG. 3, the method includes the following processes.

At 301, the broadcast data from the primary control terminal is received.

In this process, the broadcast data may include the secondary control terminal data or may not include the secondary control terminal data. For example, the broadcast data may include the synchronization data, but may not include the secondary control terminal data. When the broadcast data includes the secondary control terminal data, the secondary control terminal data may be the data that the primary control terminal sends to the first secondary control terminal. Alternatively, the secondary control terminal data may be the data that the primary control terminal sends to another secondary control terminal.

At 302, when the broadcast data includes the secondary control terminal data, whether the secondary control terminal data includes the identifier of the first secondary control terminal is determined.

In this process, when the broadcast data does not include the secondary control terminal data, it indicates that the broadcast data may not be the data to be sent to the secondary control terminal that has already established the communication connection with the primary control terminal. The broadcast data may be the data to be sent to the secondary control terminal that has not established a communication connection with the primary control terminal. Thus, when the broadcast data includes the secondary control terminal data, the first secondary control terminal that has already established the communication connection with the primary control terminal may further determine whether the secondary control terminal includes the identifier of the first secondary control terminal.

If the secondary control terminal data includes the identifier of the first secondary control terminal, it indicates that the secondary control terminal data may be the data to be sent to the first secondary control terminal. If the secondary control terminal data does not include the identifier of the first secondary control terminal, it indicates that the secondary control terminal data may not be the data to be sent to the first secondary control terminal.

At 303, if the secondary control terminal data includes the identifier of the first secondary control terminal, subsequent processing is performed on the secondary control terminal data.

In this process, the specifics of the subsequent processing performed on the secondary control terminal data by the first secondary control terminal are not limited by the present disclosure. For example, if the secondary control terminal data is image data, the secondary control terminal data may be displayed. In another example, if the secondary control terminal data is encoded image data, the secondary control terminal data may be decoded.

In one embodiment, when the broadcast data includes the secondary control terminal data, and the secondary control terminal data includes the identifier of the first secondary control terminal, the first secondary control terminal performs the subsequent processing on the secondary control terminal data. In the process of broadcasting the synchronization data, the primary control terminal sends the secondary control terminal data that needs to be sent to the first secondary control terminal as the broadcast data to the first secondary control terminal. In this scenario, the first secondary control terminal is able to distinguish the secondary control terminal data thereof from the broadcast data and to perform the processing.

FIG. 4 is a schematic flow chart of a communication method according to another example embodiment of the present disclosure. The method of the embodiment of the present disclosure may be executed by the second secondary control terminal. As shown in FIG. 4, the method includes the following processes.

At 401, the synchronization data is searched for.

In this process, the synchronization data may be broadcasted by the primary control terminal for the second secondary control terminal to establish the communication connection with the primary control terminal. The second secondary control terminal has not established a communication connection with the primary control terminal. It should be noted that the specific content of the synchronization data is not limited by the present disclosure.

Optionally, when the communication circuit of the second secondary control terminal is the narrowband circuit, the second secondary control terminal may search for the synchronization data in only one operation frequency band. When the communication circuit of the second secondary control terminal is the broadband circuit, the second secondary control terminal may search for the synchronization data in multiple operation frequency bands.

The related content of the identifier of the primary control terminal may be referred to the embodiment shown in FIG. 2, and will not be repeated herein.

At 402, after the synchronization data from the primary control terminal is found and the synchronization data includes the identifier of the primary control terminal, the identifier of the primary control terminal is added to a terminal list.

In this process, the terminal list is used to display to a user the primary control terminals with which the communication connection can be established. In this case, when multiple primary control terminals broadcast the synchronization data, the synchronization data from multiple primary control terminals may be searched by the second secondary control terminal. Through the terminal list, the user may learn one or more primary control terminals with which the communication connection can be established.

Because the primary control terminal constantly broadcasts the synchronization data in addition to sending the secondary control terminal data to the first secondary control terminal, the second control terminal may search for the synchronization data from the primary control terminal in real time. The user may learn the primary control terminal with which the communication connection can be established in real time.

It should be noted that, after the synchronization data from one primary control terminal is found, the second secondary control terminal may further interact with the primary control terminal to establish the communication connection with the primary control terminal. That is, finding the synchronization data from the primary control terminal is a prerequisite for establishing the communication connection with the primary control terminal.

In one embodiment, the synchronization data is searched for. After the synchronization data from the primary control terminal is found, the identifier of the primary control terminal is added to the terminal list. The terminal list is used to display to the user the primary control terminal with which the communication connection can be established. In the process of the broadcasting the synchronization data, the secondary control terminal data that needs to be sent to the first secondary control terminal is sent as the broadcast data to the first secondary control terminal. Thus, the second secondary control terminal may search for the synchronization data from the primary control terminal in real time. The user may learn in real time the primary control terminal with which the communication connection can be established. The second secondary control terminal may establish the communication connection with the primary control terminal in real time to improve the real-time performance for the secondary control terminal to establish the communication connection with the primary control terminal.

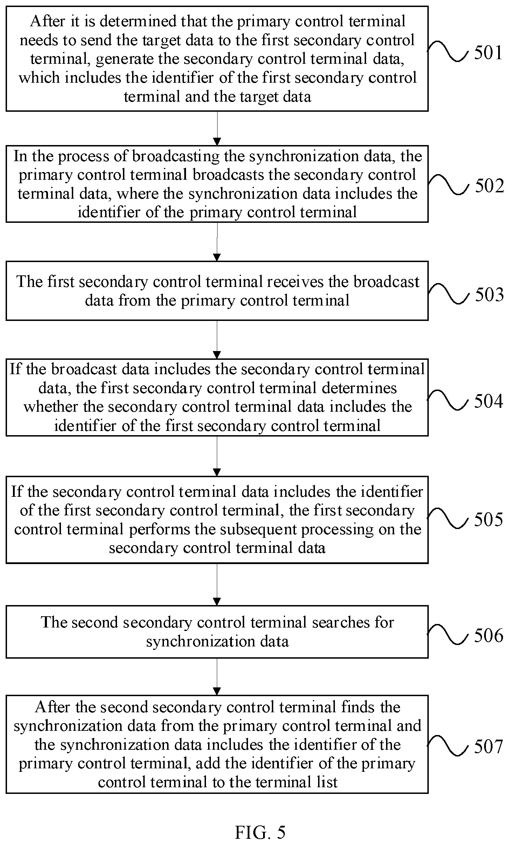

FIG. 5 is a schematic flow chart of a communication method according to another example embodiment of the present disclosure. Based on the previous embodiments, the method mainly describes interactions among the primary control terminal, the first secondary control terminal, and the second secondary control terminal. As shown in FIG. 5, the method includes the following processes.

At 501, after it is determined that the primary control terminal needs to send the target data to the first secondary control terminal, the secondary control terminal data is generated, which includes the identifier of the first secondary control terminal and the target data.

It should be noted that 501 is similar to process 201 and the description will not be repeated herein.

At 502, in the process of broadcasting the synchronization data, the primary control terminal broadcasts the secondary control terminal data, where the synchronization data includes the identifier of the primary control terminal.

In this process, a receiving success rate and utilization of link resources are both considered to limit the number of times of broadcasting the secondary control terminal data. Optionally, the number of times of broadcasting the secondary control terminal data may be smaller than or equal to a pre-configured number. The pre-configured number may be determined based on experiments.

Optionally, broadcasting the synchronization data may include periodically broadcasting the synchronization data at a pre-configured interval. For example, the synchronization data is broadcasted every 2 seconds. That is, the synchronization data is broadcasted once at the first second, the third second, the fifth second, the seventh second, the ninth second, etc., respectively. For example, the synchronization data is broadcasted periodically at 2-second interval, and the synchronization data and the secondary control terminal data are broadcasted in a same operation frequency band. In the process of broadcasting the synchronization data, the primary control terminal broadcasts the secondary control terminal data. Specifically, the synchronization data may be broadcasted at the first second and the third second, the secondary control terminal data may be broadcasted at the fifth second and the seventh second, the synchronization data may be broadcasted at the ninth second and eleventh second, and so on so forth.

At 503, the broadcast data from the primary control terminal is received by the first secondary control terminal.

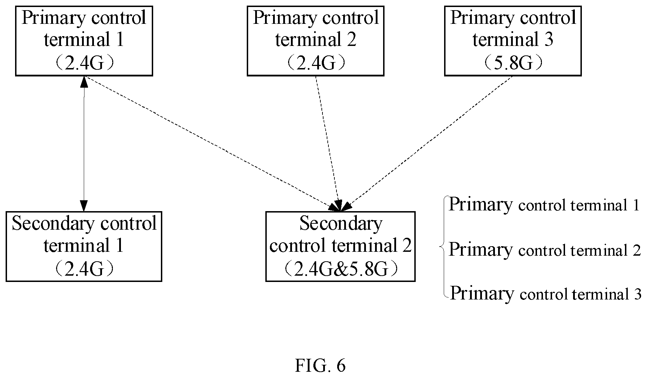

In this process, as shown in FIG. 6, assuming that the operation frequency band of the primary control terminal 1 is set to 2.4G, and the secondary control terminal 1 has already established the communication connection with the primary control terminal 1. The operation frequency band of the secondary control terminal 1 is also set to 2.4G, and the secondary control terminal 1 is able to receive the broadcast data from the primary control terminal 1. In this case, the secondary control terminal 1 may be understood as the first secondary control terminal, or another secondary control terminal that has already established the communication connection with the primary control terminal.

At 504, when the broadcast data includes the secondary control terminal data, the first secondary control terminal determines whether the secondary control terminal data includes the identifier of the first secondary control terminal.

It should be noted that 504 is similar to process 302, and the description thereof will not be repeated herein.

At 505, if the secondary control terminal data includes the identifier of the first secondary control terminal, the first secondary control terminal performs the subsequent processing on the secondary control terminal data.

In this process, optionally, the identifier of the first secondary control terminal may be included in the data header of the secondary control terminal data.

At 506, the synchronization data is searched for by the second secondary control terminal.

In this process, optionally, when the second secondary control terminal has multiple operation frequency bands, searching for the synchronization data by the second secondary control terminal may include: through a time-division manner, searching for the synchronization data in each of the multiple operation frequency bands by the second secondary control terminal. That is, the second secondary control terminal searches for the synchronization data in the time-division manner by switching the operation frequency band among the multiple operation frequency bands, and searches for the synchronization data in each of the multiple operation frequency bands. For example, the second secondary control terminal operates in 2.4G and 5.8G operation frequency bands, respectively. After the second secondary control terminal searches for the synchronization data in 2.4G operation frequency band for a period of time, the second secondary control terminal switches to 5.8G operation frequency band. Similarly, after the second secondary control terminal searches for the synchronization data in 5.8G operation frequency band for a period of time, the second secondary control terminal switches to 2.4G operation frequency band.

As shown in FIG. 6, it is further assumed that the operation frequency band of the primary control terminal 2 is set to 2.4G, the operation frequency band of the primary control terminal 3 is set to 5.8G., the secondary control terminal 2 operates in both 2.4G and 5.8G operation frequency bands, and the secondary control terminal 2 has not established a communication connection with either of the primary control terminal 1, the primary control terminal 2, or the primary control terminal 3. Both the primary control terminal 1 and the primary control terminal 2 may broadcast the synchronization data in real time in 2.4G operation frequency band. The primary control terminal 3 may broadcast the synchronization data in real time in 5.8G operation frequency band. By switching the operation frequency band, the secondary control terminal 2 may search for the synchronization data from the primary control terminal 1 and the primary control terminal 2 in real time in 2.4G operation frequency band, and may search for the synchronization data from the primary control terminal 3 in real time in 5.8G operation frequency band.

At 507, after the second secondary control terminal finds the synchronization data from the primary control terminal and the synchronization data includes the identifier of the primary control terminal, the identifier of the primary control terminal is added to the terminal list.

In this process, the terminal list is used to display to the user the primary control terminal with which the communication connection can be established. Optionally, the second secondary control terminal may add the identifier of the primary control terminal to the terminal list. Specifically, in this process, the second secondary control terminal adds the identifier of the primary control terminal to the terminal list according to an order of searching synchronization signals. Further optionally, the identifiers in the terminal list may be arranged from top to bottom according to a sequential order of finding synchronization signals.

Alternatively, the second secondary control terminal may add the identifier of the primary control terminal to the terminal list. Specifically, in this process, the second secondary control terminal adds the identifier of the primary control terminal to the terminal list according to a size relationship between a signal strength of the to-be-added primary control terminal and the signal strength of the already-added primary control terminals whose identifiers have already been added to the terminal list. Further optionally, the identifiers in the terminal list may be arranged from top to bottom in a descending order of the corresponding signal strengths. The user anticipates that the primary control terminal with which the second secondary control terminal establishes the communication connection is often the primary control terminal that is closer to the second secondary control terminal. When the primary control terminal is closer to the second secondary control terminal, its signal strength is greater. Thus, the identifiers in the terminal list are arranged from top to bottom in the descending order of the signal strengths, thereby facilitating the user to find the primary control terminal with which the user wants to establish the communication connection and improving user experience.

To avoid duplication of the identifiers of the primary control terminals in the terminal list, before the second secondary control terminal adds the identifier of the primary control terminal to the terminal list, the following process may further be included. The second secondary control terminal determines whether the terminal list includes the to-be-added identifier of the primary control terminal. When the terminal list does not include the to-be-added identifier of the primary control terminal, the second secondary control terminal adds the to-be-added identifier of the primary control terminal to the terminal list. It should be noted that when the terminal list includes the to-be-added identifier of the primary control terminal, the second secondary control terminal does not add the to-be-added identifier of the primary control terminal to the terminal list.

Optionally, to avoid displaying the primary control terminal that was in operation but is no longer in operation, the method of the present disclosure may further include the following process. The second secondary control terminal determines whether the synchronization data of each of the primary control terminals whose identifiers are included in the terminal list has been found within a pre-configured time period. When the synchronization data of the primary control terminal whose identifier is included in the terminal list has not been found within the pre-configured time period, the second secondary control terminal deletes the identifier from the terminal list. It should be noted that, when the synchronization data of the primary control terminal whose identifier is included in the terminal list has been found within the pre-configured time period, the process ends with no action.

It should be noted that there is no restriction in the order of performing process 503 through process 505 and performing process 506 through process 507.

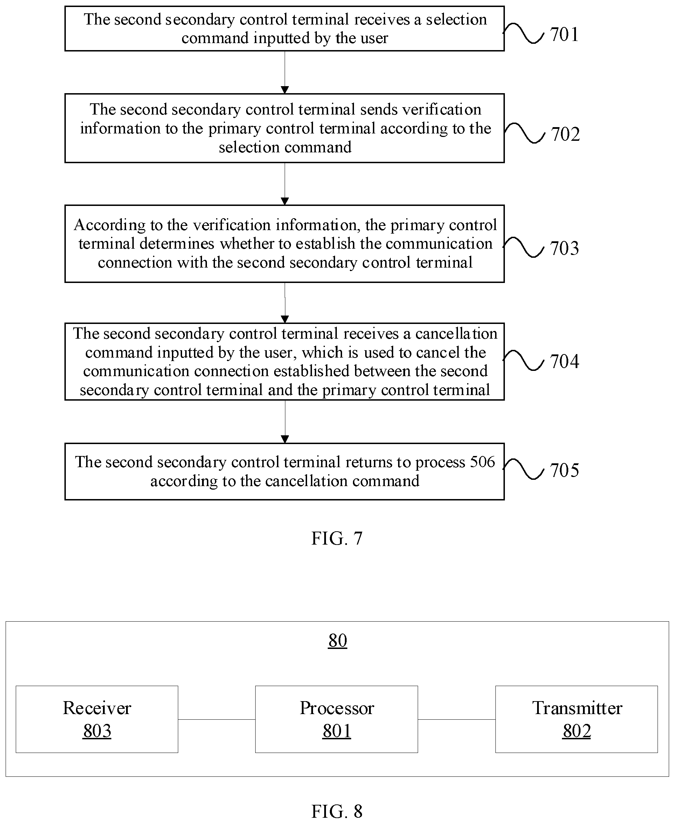

Optionally, as shown in FIG. 7, the method of the present disclosure also includes the following processes.

At 701, the second secondary control terminal receives a selection command inputted by the user.

In this process, the selection command is used to select the primary control terminal from the terminal list. Optionally, the second secondary control terminal may receive the selection command inputted by the user through a human-machine interface.

At 702, the second secondary control terminal sends verification information to the primary control terminal according to the selection command.

In this process, the verification information may an authorization code. The specific format of the authorization code is not limited by the present disclosure. Optionally, the verification information may be determined by user input. Optionally, process 702 may further include the following process. The second secondary control terminal obtains command data corresponding to the selection command. The second secondary control terminal matches the command data against the terminal list to determine whether the command data matches the primary control terminal. The second secondary control terminal sends the verification information to the primary control terminal.

At 703, according to the verification information, the primary control terminal determines whether to establish the communication connection with the second secondary control terminal.

In this process, specifically, the primary control terminal determines whether the verification information satisfies a pre-configured verification information condition. When the verification information satisfies the pre-configured verification information condition, the primary control terminal determines to establish the communication connection with the second secondary control terminal. When the verification information does not satisfy the pre-configured verification information condition, the primary control terminal determines not to establish the communication connection with the second secondary control terminal.

It should be noted that, after the primary control terminal determines to establish the communication connection with the second secondary control terminal, the second secondary control terminal may establish the communication connection with the primary control terminal. The specific process of establishing the communication connection after the primary control terminal determines to establish the communication connection with the second secondary control terminal is not limited by the present disclosure.

Optionally, after the second secondary control terminal establishes the communication connection with the primary control terminal, the method may further include process 704.

At 704, the second secondary control terminal receives a cancellation command inputted by the user, which is used to cancel the communication connection established between the second secondary control terminal and the primary control terminal.

In this process, optionally, the second secondary control terminal may receive the cancellation command inputted by the user through the human-machine interface. Alternatively, the second secondary control terminal may receive the cancellation command inputted by the user through a keyboard.

At 705, the second secondary control terminal returns to process 506 according to the cancellation command.

In this process, after receiving the user input to cancel the communication connection between the second secondary control terminal and the primary control terminal, the second secondary control terminal may search for the synchronization data again.

In the embodiments of the present disclosure, when it is determined that the target data needs to be sent to the first secondary control terminal that has already established the communication connection with the primary control terminal, the secondary control terminal data including the identifier of the first secondary control terminal and the target data is generated. In the process of broadcasting the synchronization data, the secondary control terminal data is broadcasted. The first secondary control terminal receives the broadcast data sent by the primary control terminal. When the broadcast data includes the secondary control terminal data and the secondary control terminal data includes the identifier of the first secondary control terminal, the first secondary control terminal performs the subsequent processing on the secondary control terminal data. The second secondary control terminal searches for the synchronization data. After the second secondary control terminal finds the synchronization data from the primary control terminal, the second secondary control terminal adds the identifier of the primary control terminal of the synchronization data to the terminal list. The terminal list is used to display to the user the primary control terminals with which the communication connection can be established. Then, the second secondary control terminal may establish the communication connection with the primary control terminal in real time according to the synchronization data broadcasted by the primary control terminal, thereby improving the real-time performance for the secondary control terminal to establish the communication connection with the primary control terminal. Moreover, the first secondary control terminal is able to distinguish the secondary control terminal data thereof from the broadcast data and to perform the processing.

FIG. 8 is a schematic structural diagram of a communication apparatus according to an example embodiment of the present disclosure. The communication apparatus of the embodiment of the present disclosure may be applied to the primary control terminal to become part or all of the primary control terminal in the form of software, hardware, or a combination of software and hardware. As shown in FIG. 8, the communication apparatus 80 provided by the embodiment of the present disclosure includes a processor 801 and a transmitter 802.

The processor 801 is configured to generate the secondary control terminal data when it is determined that the target data needs to be sent to the first secondary control terminal that has already established the communication connection. The secondary control terminal data includes the identifier of the first secondary control terminal and the target data.

The transmitter is configured to broadcast the secondary control terminal data in the process of broadcasting the synchronization data. The synchronization data includes the identifier of the primary control terminal.

Optionally, the number of times the secondary control terminal data is broadcasted is smaller than or equal to the pre-configured number.

Optionally, the transmitter 802 is configured to broadcast the synchronization data. Specifically, the transmitter 802 periodically broadcasts the synchronization data at the pre-configured interval.

Optionally, the transmitter 802 is configured to broadcast the synchronization data and the secondary control terminal data in the same operation frequency band.

Optionally, the communication apparatus 80 further includes: a receiver 803.

The receiver 803 is configured to receive the verification information sent by the second secondary control terminal according to the synchronization data from the second secondary control terminal that has not established a communication connection.

The processor 801 is further configured to determine whether to establish the communication connection with the second secondary control terminal according to the verification information.

Optionally, the primary control terminal includes the primary remote controller of the UAV, and the secondary control terminal includes the secondary remote controller.

Optionally, the primary control terminal further includes: primary user equipment. The application program (APP) of the primary user equipment is used to control the UAV through the primary remote controller.

Optionally, the secondary control terminal further includes: secondary user equipment. The APP of the secondary user equipment is used to control the UAV through the secondary remote controller.

Optionally, the identifier of the first secondary control terminal is included in the data header of the secondary control terminal data.

The communication apparatus of the embodiment of the present disclosure may be used to execute the technical solutions at the primary control terminal in the method embodiments shown in FIG. 2 and FIG. 5. The operation principle and the technical effect are similar, and the corresponding description will not be repeated herein.

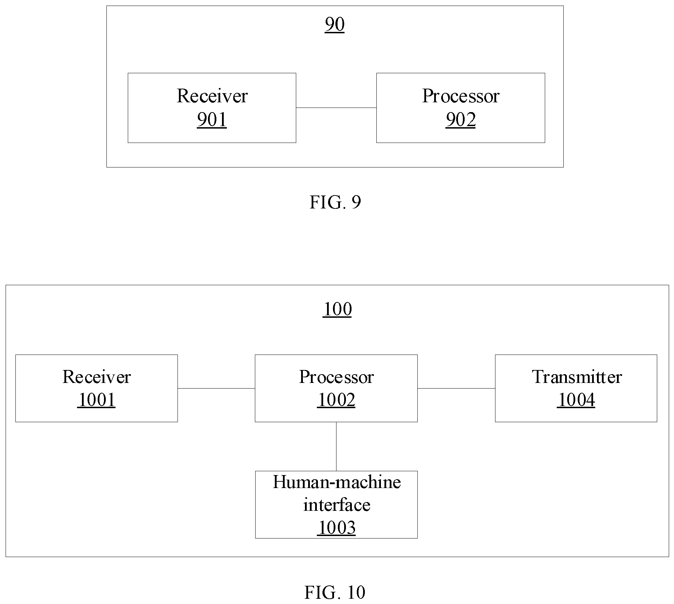

FIG. 9 is a schematic structural diagram of a communication apparatus according to another example embodiment of the present disclosure. The communication apparatus of the embodiment of the present disclosure may be applied to the first secondary control terminal to become part or all of the first secondary control terminal in the form of software, hardware, or a combination of software and hardware. As shown in FIG. 9, the communication apparatus 90 provided by the embodiment of the present disclosure includes a receiver 901 and a processor 902.

The receiver 901 is configured to receive the broadcast data from the primary control terminal.

The processor 902 is configured to determine whether the secondary control terminal data includes the identifier of the first secondary control terminal when the broadcast data includes the secondary control terminal data.

The processor 902 is further configured to perform the subsequent processing on the secondary control terminal data if the secondary control terminal data includes the identifier of the first secondary control terminal.

Optionally, the primary control terminal may include the primary remote controller of the UAV, and the first secondary control terminal may include the secondary remote controller of the UAV.

Optionally, the primary control terminal may further include: the primary user equipment. The APP of the primary user equipment may be used to control the UAV through the primary remote controller.

Optionally, the first secondary control terminal may further include: the secondary user equipment. The APP of the secondary user equipment may be used to control the UAV through the secondary remote controller.

Optionally, the identifier of the first secondary control terminal may be included in the data header of the secondary control terminal data.

The communication apparatus of the embodiment of the present disclosure may be used to execute the technical solutions at the first secondary control terminal in the method embodiments shown in FIG. 3 and FIG. 5. The operation principle and the technical effect are similar, and the corresponding description will not be repeated herein.

FIG. 10 is a schematic structural diagram of a communication apparatus according to another example embodiment of the present disclosure. The communication apparatus of the embodiment of the present disclosure may be applied to the second secondary control terminal to become part or all of the second secondary control terminal in the form of software, hardware, or a combination of software and hardware. As shown in FIG. 10, the communication apparatus 100 provided by the embodiment of the present disclosure includes a receiver 1001 and a processor 1002.

The receiver 1001 is configured to search for the synchronization data.

The processor 1002 is configured to add the identifier of the primary control terminal to the terminal list after the synchronization data from the primary control terminal is found and the synchronization data includes the identifier of the aster control terminal. The terminal list is used to display to the user the primary control terminal with which the communication connection can be established.

Optionally, the processor 1002 is further configured to determine whether the synchronization data of each of the primary control terminals whose identifiers are included in the terminal list has been found within a pre-configured time period, and when the synchronization data of the primary control terminal whose identifier is included in the terminal list has not been found within the pre-configured time period, to delete the identifier from the terminal list.

Optionally, before adding the identifier of the primary control terminal to the terminal list, the processor 1002 is further configured to determine whether the terminal list includes the to-be-added identifier of the primary control terminal, and when the terminal list does not include the to-be-added identifier of the primary control terminal, to add the to-be-added identifier of the primary control terminal to the terminal list.

Optionally, to add the identifier of the primary control terminal to the terminal list, the processor 1002 is further configured to add the identifier of the primary control terminal to the terminal list according to a size relationship between a signal strength of the to-be-added primary control terminal and the signal strength of the already-added primary control terminals whose identifiers have already been added to the terminal list.

Optionally, the identifiers in the terminal list may be arranged from top to bottom in the descending order of the corresponding signal strengths.

Optionally, when the second secondary control terminal has multiple operation frequency bands, to search for the synchronization data, the receiver 1001 is further configured to through the time-division manner, search for the synchronization data in each of the multiple operation frequency bands.

Optionally, the communication apparatus further includes: a human-machine interface 1003 and a transmitter 1004.

The human-machine interface 1003 is used to receive the selection command inputted by the user. The selection command is used to select the primary control terminal from the terminal list.

The transmitter 1004 is used to send the verification information to the primary control terminal according to the selection command.

Optionally, to send the verification information to the primary control terminal according to the selection command, the transmitter 1004 is further configured to obtain command data corresponding to the selection command, match the command data against the terminal list to determine whether the command data matches the primary control terminal, and send the verification information to the primary control terminal.

Optionally, the primary control terminal includes the primary remote controller of the UAV, and the second secondary control terminal includes the secondary remote controller of the UAV.

Optionally, the primary control terminal further includes: the primary user equipment. The APP of the primary user equipment is used to control the UAV through the primary remote controller.

Optionally, the second secondary control terminal further includes: the secondary user equipment. The APP of the secondary user equipment is used to control the UAV through the secondary remote controller.

The communication apparatus of the embodiment of the present disclosure may be used to execute the technical solutions at the second secondary control terminal in the method embodiments shown in FIG. 4 and FIG. 5. The operation principle and the technical effect are similar, and the corresponding description will not be repeated herein.

The present disclosure also provides a communication system. The communication system includes: a primary control terminal, a first secondary control terminal that has established the communication connection with the primary control terminal, and a second secondary control terminal that has not established a communication connection with the primary control terminal.

When it is determined that the target data needs to be sent to the first secondary control terminal, the primary control terminal generates the secondary control terminal data. The secondary control terminal data includes the identifier of the first secondary control terminal and the target data.

In the process of broadcasting the synchronization data, the primary control terminal broadcasts the secondary control terminal data. The synchronization data includes the identifier of the primary control terminal.

The first secondary control terminal receives the broadcast data from the primary control terminal.

When the broadcast data includes the secondary control terminal data, the first secondary control terminal determines whether the secondary control terminal data includes the identifier of the first secondary control terminal.

If the secondary control terminal data includes the identifier of the first secondary control terminal, the first secondary control terminal performs the subsequent processing on the secondary control terminal data.

The second secondary control terminal searches for the synchronization data.

After the second secondary control terminal finds the synchronization data of the primary control terminal, and the synchronization data includes the identifier of the primary control terminal, the second secondary control terminal adds the identifier of the primary control terminal to the terminal list. The terminal list is used to display to the user the primary control terminal with which the communication connection can be established.

Optionally, the number of times the secondary control terminal data is broadcasted is smaller than or equal to the pre-configured number.

Optionally, broadcasting the synchronization data by the primary control terminal includes: periodically broadcasting the synchronization data at the pre-configured interval by the primary control terminal.

Optionally, the primary control terminal broadcasts the synchronization data and the secondary control terminal data in the same operation frequency band.

Optionally, the second secondary control terminal receives the selection command inputted by the user. The selection command is used to select the primary control terminal from the terminal list.

According to the selection command, the second secondary control terminal sends the verification information to the primary control terminal.

The primary control terminal receives the verification information sent by the second secondary control terminal according to the synchronization data from the second secondary control terminal.

The primary control terminal determines whether to establish the communication connection with the second secondary control terminal according to the verification information.

Optionally, sending the verification information by the second secondary control terminal to the primary control terminal according to the selection command includes the following process.

The second secondary control terminal obtains the command data corresponding to the selection command, matches the command data against the terminal list to determine whether the command data matches the primary control terminal, and sends the verification information to the primary control terminal.

Optionally, the second secondary control terminal determines whether the synchronization data of each of the primary control terminals whose identifiers are included in the terminal list has been found within the pre-configured time period, and when the synchronization data of the primary control terminal whose identifier is included in the terminal list has not been found within the pre-configured time period, the second secondary control terminal deletes the identifier from the terminal list.

Optionally, before the second secondary control terminal adds the identifier of the primary control terminal to the terminal list, the following process may further be included. The second secondary control terminal determines whether the terminal list includes the to-be-added identifier of the primary control terminal. When the terminal list does not include the to-be-added identifier of the primary control terminal, the second secondary control terminal adds the to-be-added identifier of the primary control terminal to the terminal list.

Optionally, adding the identifier of the primary control terminal by the second secondary control terminal to the terminal list includes the following process.

The second secondary control terminal adds the identifier of the primary control terminal to the terminal list according to a size relationship between the signal strength of the to-be-added primary control terminal and the signal strength of the already-added primary control terminals whose identifiers have already been added to the terminal list.

Optionally, the identifiers in the terminal list may be arranged from top to bottom in the descending order of the corresponding signal strengths.

Optionally, when the second secondary control terminal has multiple operation frequency bands, searching for the synchronization data by the second secondary control terminal includes the following process.

Through the time-division manner, the second secondary control terminal searches for the synchronization data in each of the multiple operation frequency bands.

Optionally, the identifier of the first secondary control terminal may be included in the data header of the secondary control terminal data.

Optionally, the primary control terminal includes the primary remote controller of the UAV, and both the first secondary control terminal and the second secondary control terminal include the secondary remote controller of the UAV.

Optionally, the primary control terminal further includes: the primary user equipment. The APP of the primary user equipment is used to control the UAV through the primary remote controller.

Optionally, the first secondary control terminal further includes: first secondary user equipment. The APP of the first secondary user equipment is used to control the UAV through a first secondary remote controller.

Optionally, the second secondary control terminal further includes: second secondary user equipment. The APP of the second secondary user equipment is used to control the UAV through a second secondary remote controller.

Those of ordinary skill in the art may understand that all or some of the processes of the in the method embodiments may be implemented by a program instructing relevant hardware. The program may be stored in a computer-readable storage medium. When the program is executed, the processes of the method embodiments are executed. The storage medium includes: a read-only memory (ROM), a random-access memory (RAM), a magnetic disk, an optical disk, or other media that can store the program codes.

Finally, it should be noted that the above embodiments are only used to illustrate the technical solutions of the present disclosure, and not to limit them. Although the present disclosure has been described in detail with reference to the above embodiments, those of ordinary skill in the art should understand that it is still possible to modify the technical solutions described in the above embodiments, or to equivalently replace some or all of the technical features. These modifications or replacements made within the spirit and principle of the corresponding technical solutions still fall with the scope of the present disclosure.

## Claims

1. A communication method applied to a primary control terminal, comprising:
when it is determined that target data needs to be sent to a first secondary control terminal that has already established a communication connection with the primary control terminal, generating secondary control terminal data, which includes an identifier of the first secondary control terminal and the target data;
in a process of broadcasting synchronization data, broadcasting the secondary control terminal data, where the synchronization data includes an identifier of the primary control terminal.

2. The method of claim 1, wherein a number of times of broadcasting the secondary control terminal data is smaller than or equal to a pre-configured number.

3. The method of claim 1 or 2, wherein broadcasting the synchronization data includes:
periodically broadcasting the synchronization data at a pre-configured interval.

4. The method of any of claims 1-3, wherein:
the synchronization data and the secondary control terminal data are broadcasted in a same operation frequency band.

5. The method of any of claims 1-4, further comprising:
receiving verification information sent by a second secondary control terminal according to the synchronization data from the second secondary control terminal that has not established a communication connection;
determining whether to establish the communication connection with the second secondary control terminal according to the verification information.

6. The method of any of claims 1-5, wherein:
the primary control terminal includes a primary remote controller of an unmanned aerial vehicle (UAV);
a secondary control terminal includes a secondary remote controller of the UAV.

7. The method of claim 6, wherein the primary control terminal further includes:
primary user equipment, wherein an application program (APP) of the primary user equipment is used to control the UAV through the primary remote controller.

8. The method of claim 6 or 7, wherein the secondary control terminal further includes:
secondary user equipment, wherein an APP of the secondary user equipment is used to control the UAV through the secondary remote controller.

9. The method of any of claims 1-8, wherein the identifier of the first secondary control terminal is included in data header of the secondary control terminal data.

10. A communication method applied to a first secondary control terminal, comprising:
receiving broadcast data from a primary control terminal;
when the broadcast data includes secondary control terminal data, determining whether the secondary control terminal data includes an identifier of the first secondary control terminal;
if the secondary control terminal data includes the identifier of the first secondary control terminal, performing subsequent processing on the secondary control terminal data.

11. The method of claim 10, wherein:
the primary control terminal includes a primary remote controller of an unmanned aerial vehicle (UAV);
the first secondary control terminal includes a secondary remote controller of the UAV.

12. The method of claim 11, wherein the primary control terminal further includes:
primary user equipment, wherein an application program (APP) of the primary user equipment is used to control the UAV through the primary remote controller.

13. The method of claim 11 or 12, wherein the first secondary control terminal further includes:
secondary user equipment, wherein an APP of the secondary user equipment is used to control the UAV through the secondary remote controller.

14. The method of any of claims 10-13, wherein the identifier of the first secondary control terminal is included in data header of the secondary control terminal data.

15. A communication method applied to a second secondary control terminal, comprising:
searching for synchronization data;
after the synchronization data from a primary control terminal is found, and the synchronization data includes an identifier of the primary control terminal, adding the identifier of the primary control terminal to a terminal list, which is used to display to a user the primary control terminal with which a communication connection can be established.

16. The method of claim 15, further comprising:
determining whether the synchronization data of each of the primary control terminals whose identifiers are included in the terminal list has been found within a pre-configured time period;
when the synchronization data of the primary control terminal whose identifier is included in the terminal list has not been found within the pre-configured time period, deleting the identifier from the terminal list.

17. The method of claim 15 or 16, wherein before adding the identifier of the primary control terminal to the terminal list, the method further includes:
determining whether the terminal list includes the identifier of the primary control terminal;
when the terminal list does not include the identifier of the primary control terminal, executing a process of adding the identifier of the primary control terminal to the terminal list.

18. The method of any of claims 15-17, wherein adding the identifier of the primary control terminal to the terminal list includes:
adding the identifier of the primary control terminal to the terminal list according to a size relationship between a signal strength of the primary control terminal and the signal strength of already-added primary control terminals whose identifiers have already been added to the terminal list.

19. The method of claim 18, wherein:
the identifiers in the terminal list are arranged from top to bottom in a descending order of the corresponding signal strengths.

20. The method of any of claims 15-19, wherein when the second secondary control terminal has multiple operation frequency bands, searching for the synchronization data includes:
through a time-division manner, searching for the synchronization data in each of the multiple operation frequency bands.

21. The method of any of claims 15-20, further comprising:
receiving a selection command, which is used to select the primary control terminal from the terminal list;
according to the selection command, sending verification information to the primary control terminal.

22. The method of claim 21, wherein sending the verification information to the primary control terminal according to the selection command includes:
obtaining command data corresponding to the selection command;
matching the command data against the terminal list to determine whether the command data matches the primary control terminal;
sending the verification information to the primary control terminal.

23. The method of any of claims 15-22, wherein:
the primary control terminal includes a primary remote controller of an unmanned aerial vehicle (UAV);
the second secondary control terminal includes a secondary remote controller of the UAV.

24. The method of claim 23, wherein the primary control terminal further includes:
primary user equipment, wherein an application program (APP) of the primary user equipment is used to control the UAV through the primary remote controller.

25. The method of claim 23 or 24, wherein the second secondary control terminal further includes:
secondary user equipment, wherein an APP of the secondary user equipment is used to control the UAV through the secondary remote controller.

26. A communication method, comprising:
when it is determined that target data needs to be sent to a first secondary control terminal that has already established a communication connection with a primary control terminal, generating, by the primary control terminal, secondary control terminal data, which includes an identifier of the first secondary control terminal and the target data;
in a process of broadcasting synchronization data, broadcasting, by the primary control terminal, the secondary control terminal data, where the synchronization data includes an identifier of the primary control terminal;
receiving, by the first secondary control terminal, the broadcast data from the primary control terminal;
when the broadcast data includes secondary control terminal data, determining, by the first secondary control terminal, whether the secondary control terminal data includes an identifier of the first secondary control terminal;
if the secondary control terminal data includes the identifier of the first secondary control terminal, performing, by the first secondary control terminal, subsequent processing on the secondary control terminal data;
searching for synchronization data by a second secondary control terminal that has not established a communication connection with the primary control terminal;
after the synchronization data from the primary control terminal is found, and the synchronization data includes an identifier of the primary control terminal, adding, by the second secondary control terminal, the identifier of the primary control terminal to a terminal list, which is used to display to a user the primary control terminal with which the communication connection can be established.

27. The method of claim 26, wherein a number of times of broadcasting the secondary control terminal data is smaller than or equal to a pre-configured number.

28. The method of claim 26 or 27, wherein broadcasting the synchronization data includes:
periodically broadcasting the synchronization data at a pre-configured interval.

29. The method of any of claims 26-28, wherein:
the synchronization data and the secondary control terminal data are broadcasted in a same operation frequency band.

30. The method of any of claims 26-29, further comprising:
receiving, by the second secondary control terminal, a selection command, which is used to select the primary control terminal from the terminal list;
according to the selection command, sending, by the second secondary control terminal, verification information to the primary control terminal;
receiving, by the primary control terminal, the verification information sent by the second secondary control terminal according to the synchronization data from the second secondary control terminal;
determining, by the primary control terminal, whether to establish the communication connection with the second secondary control terminal according to the verification information.

31. The method of claim 30, wherein sending, by the second secondary control terminal, the verification information to the primary control terminal according to the selection command includes:
obtaining, by the second secondary control terminal, command data corresponding to the selection command;
matching, by the second secondary control terminal, the command data against the terminal list to determine whether the command data matches the primary control terminal;
sending, by the second secondary control terminal, the verification information to the primary control terminal.

32. The method of any of claims 26-31, further comprising:
determining, by the second secondary control terminal, whether the synchronization data of each of the primary control terminals whose identifiers are included in the terminal list has been found within a pre-configured time period;
when the synchronization data of the primary control terminal whose identifier is included in the terminal list has not been found within the pre-configured time period, deleting, by the second secondary control terminal, the identifier from the terminal list.

33. The method of any of claims 26-32, wherein before the second secondary control terminal adds an identifier of the primary control terminal to the terminal list, the method further includes:
determining, by the second secondary control terminal, whether the terminal list includes the identifier of the primary control terminal;
when the terminal list does not include the identifier of the primary control terminal, executing, by the second secondary control terminal, a process of adding the identifier of the primary control terminal to the terminal list.

34. The method of any of claims 26-33, wherein adding, by the second secondary control terminal, the identifier of the primary control terminal to the terminal list includes:
adding, by the second secondary control terminal, the identifier of the primary control terminal to the terminal list according to a size relationship between a signal strength of the primary control terminal and the signal strength of already-added primary control terminals whose identifiers have already been added to the terminal list.

35. The method of claim 34, wherein:
the identifiers in the terminal list are arranged from top to bottom in a descending order of the corresponding signal strengths.

36. The method of any of claims 26-35, wherein when the second secondary control terminal has multiple operation frequency bands, searching for the synchronization data includes:
through a time-division manner, searching, by the second secondary control terminal, for the synchronization data in each of the multiple operation frequency bands.

37. The method of any of claims 26-36, wherein the identifier of the first secondary control terminal is included in data header of the secondary control terminal data.

38. The method of any of claims 26-37, wherein:
the primary control terminal includes a primary remote controller of an unmanned aerial vehicle (UAV);
both the first secondary control terminal and the second secondary control terminal include a secondary remote controller of the UAV.

39. The method of claim 38, wherein the primary control terminal further includes:
primary user equipment, wherein an application program (APP) of the primary user equipment is used to control the UAV through the primary remote controller.

40. The method of claim 38 or 39, wherein the first secondary control terminal further includes:
first secondary user equipment, wherein an APP of the first secondary user equipment is used to control the UAV through the secondary remote controller.

41. The method of any of claims 38-40, wherein the second secondary control terminal further includes:
second secondary user equipment, wherein an APP of the second secondary user equipment is used to control the UAV through the secondary remote controller.

42. A communication apparatus applied to a primary control terminal, comprising:
a processor configured to, when it is determined that target data needs to be sent to a first secondary control terminal that has already established a communication connection with the primary control terminal, generate secondary control terminal data, which includes an identifier of the first secondary control terminal and the target data;
a transmitter configured to, in a process of broadcasting synchronization data, broadcast the secondary control terminal data, where the synchronization data includes an identifier of the primary control terminal.

43. The apparatus of claim 42, wherein a number of times of broadcasting the secondary control terminal data is smaller than or equal to a pre-configured number.

44. The apparatus of claim 42 or 43, wherein broadcasting the synchronization data by the transmitter includes:
periodically broadcasting the synchronization data at a pre-configured interval.

45. The apparatus of any of claims 42-44, wherein:
the synchronization data and the secondary control terminal data are broadcasted by the transmitter in a same operation frequency band.

46. The apparatus of any of claims 42-45, further comprising a receiver, wherein:
the receiver is configured to receive verification information sent by a second secondary control terminal according to the synchronization data from the second secondary control terminal that has not established a communication connection;
the processor is further configured to determine whether to establish the communication connection with the second secondary control terminal according to the verification information.

47. The apparatus of any of claims 42-46, wherein:
the primary control terminal includes a primary remote controller of an unmanned aerial vehicle (UAV);
a secondary control terminal includes a secondary remote controller of the UAV.

48. The apparatus of claim 47, wherein the primary control terminal further includes:
primary user equipment, wherein an application program (APP) of the primary user equipment is used to control the UAV through the primary remote controller.

49. The apparatus of claim 47 or 48, wherein the secondary control terminal further includes:
secondary user equipment, wherein an APP of the secondary user equipment is used to control the UAV through the secondary remote controller.

50. The apparatus of any of claims 42-49, wherein the identifier of the first secondary control terminal is included in data header of the secondary control terminal data.

51. A communication apparatus applied to a first secondary control terminal, comprising a receiver and a processor, wherein:
the receiver is configured to receive broadcast data from a primary control terminal;
the processor is configured to, when the broadcast data includes secondary control terminal data, determine whether the secondary control terminal data includes an identifier of the first secondary control terminal;
if the secondary control terminal data includes the identifier of the first secondary control terminal, the processor is further configured to perform subsequent processing on the secondary control terminal data.

52. The apparatus of claim 51, wherein:
the primary control terminal includes a primary remote controller of an unmanned aerial vehicle (UAV);
the first secondary control terminal includes a secondary remote controller of the UAV.

53. The apparatus of claim 52, wherein the primary control terminal further includes:
primary user equipment, wherein an application program (APP) of the primary user equipment is used to control the UAV through the primary remote controller.

54. The apparatus of claim 52 or 53, wherein the first secondary control terminal further includes:
secondary user equipment, wherein an APP of the secondary user equipment is used to control the UAV through the secondary remote controller.

55. The apparatus of any of claims 51-54, wherein the identifier of the first secondary control terminal is included in data header of the secondary control terminal data.

56. A communication apparatus applied to a second secondary control terminal, comprising a receiver and a processor, wherein:
the receiver is configured to search for synchronization data;
the processor is configured to, after the synchronization data from a primary control terminal is found, and the synchronization data includes an identifier of the primary control terminal, add the identifier of the primary control terminal to a terminal list, which is used to display to a user the primary control terminal with which a communication connection can be established.

57. The apparatus of claim 56, wherein the processor is further configured to:
determine whether the synchronization data of each of the primary control terminals whose identifiers are included in the terminal list has been found within a pre-configured time period;
when the synchronization data of the primary control terminal whose identifier is included in the terminal list has not been found within the pre-configured time period, delete the identifier from the terminal list.

58. The apparatus of claim 56 or 57, wherein before adding an identifier of the primary control terminal to the terminal list, the processor is further configured to:
determine whether the terminal list includes the identifier of the primary control terminal;
when the terminal list does not include the identifier of the primary control terminal, execute a process of adding the identifier of the primary control terminal to the terminal list.

59. The apparatus of any of claims 56-58, wherein adding, by the processor, the identifier of the primary control terminal to the terminal list includes:
adding the identifier of the primary control terminal to the terminal list according to a size relationship between a signal strength of the primary control terminal and the signal strength of already-added primary control terminals whose identifiers have already been added to the terminal list.

60. The apparatus of claim 59, wherein:
the identifiers in the terminal list are arranged from top to bottom in a descending order of the corresponding signal strengths.

61. The apparatus of any of claims 56-60, wherein when the second secondary control terminal has multiple operation frequency bands, searching for the synchronization data by the receiver includes:
through a time-division manner, searching for the synchronization data in each of the multiple operation frequency bands.

62. The apparatus of any of claims 56-61, further comprising a human-machine interface and a transmitter, wherein:
the human-machine interface is configured to receive a selection command inputted by a user, which is used to select the primary control terminal from the terminal list;
according to the selection command, the transmitter is configured to send verification information to the primary control terminal.

63. The apparatus of claim 62, wherein sending the verification information by the transmitter to the primary control terminal according to the selection command includes:
obtaining command data corresponding to the selection command;
matching the command data against the terminal list to determine whether the command data matches the primary control terminal;
sending the verification information to the primary control terminal.

64. The apparatus of any of claims 56-63, wherein:
the primary control terminal includes a primary remote controller of an unmanned aerial vehicle (UAV);
the second secondary control terminal includes a secondary remote controller of the UAV.

65. The apparatus of claim 64, wherein the primary control terminal further includes:
primary user equipment, wherein an application program (APP) of the primary user equipment is used to control the UAV through the primary remote controller.

66. The apparatus of claim 64 or 65, wherein the second secondary control terminal further includes:
secondary user equipment, wherein an APP of the secondary user equipment is used to control the UAV through the secondary remote controller.

67. A communication system, comprising a primary control terminal, a first secondary control terminal that has established a communication connection with the primary control terminal, and a second secondary control terminal that has not established a communication connection with the primary control terminal, wherein:
when it is determined that target data needs to be sent to a first secondary control terminal that has already established a communication connection with a primary control terminal, the primary control terminal generates secondary control terminal data, which includes an identifier of the first secondary control terminal and the target data;
in a process of broadcasting synchronization data, the primary control terminal broadcasts the secondary control terminal data, where the synchronization data includes an identifier of the primary control terminal;
the first secondary control terminal receives the broadcast data from the primary control terminal;
when the broadcast data includes secondary control terminal data, the first secondary control terminal determines whether the secondary control terminal data includes an identifier of the first secondary control terminal;
if the secondary control terminal data includes the identifier of the first secondary control terminal, the first secondary control terminal performs subsequent processing on the secondary control terminal data;
the second secondary control terminal searches for synchronization data;
after the synchronization data from the primary control terminal is found, and the synchronization data includes an identifier of the primary control terminal, the second secondary control terminal adds the identifier of the primary control terminal to a terminal list, which is used to display to a user the primary control terminal with which the communication connection can be established.

68. The system of claim 67, wherein a number of times of broadcasting the secondary control terminal data is smaller than or equal to a pre-configured number.

69. The system of claim 67 or 68, wherein broadcasting the synchronization data by the primary control terminal includes:
periodically broadcasting the synchronization data at a pre-configured interval.

70. The system of any of claims 67-69, wherein:
the synchronization data and the secondary control terminal data are broadcasted by the primary control terminal in a same operation frequency band.

71. The system of any of claims 67-70, wherein:
the second secondary control terminal receives a selection command inputted by a user, which is used to select the primary control terminal from the terminal list;
according to the selection command, the second secondary control terminal sends verification information to the primary control terminal;
the primary control terminal receives the verification information sent by the second secondary control terminal according to the synchronization data from the second secondary control terminal;
the primary control terminal determines whether to establish the communication connection with the second secondary control terminal according to the verification information.

72. The system of claim 71, wherein sending, by the second secondary control terminal, the verification information to the primary control terminal according to the selection command includes:
obtaining, by the second secondary control terminal, command data corresponding to the selection command;
matching, by the second secondary control terminal, the command data against the terminal list to determine whether the command data matches the primary control terminal;
sending, by the second secondary control terminal, the verification information to the primary control terminal.

73. The system of any of claims 67-72, wherein:
the second secondary control terminal determines whether the synchronization data of each of the primary control terminals whose identifiers are included in the terminal list has been found within a pre-configured time period;
when the synchronization data of the primary control terminal whose identifier is included in the terminal list has not been found within the pre-configured time period, the second secondary control terminal deletes the identifier from the terminal list.

74. The system of any of claims 67-73, wherein before the second secondary control terminal adds an identifier of the primary control terminal to the terminal list:
the second secondary control terminal determines whether the terminal list includes the identifier of the primary control terminal;
when the terminal list does not include the identifier of the primary control terminal, the second secondary control terminal executes a process of adding the identifier of the primary control terminal to the terminal list.

75. The system of any of claims 67-74, wherein adding, by the second secondary control terminal, the identifier of the primary control terminal to the terminal list includes:
adding, by the second secondary control terminal, the identifier of the primary control terminal to the terminal list according to a size relationship between a signal strength of the primary control terminal and the signal strength of already-added primary control terminals whose identifiers have already been added to the terminal list.

76. The system of claim 75, wherein:
the identifiers in the terminal list are arranged from top to bottom in a descending order of the corresponding signal strengths.

77. The system of any of claims 67-76, wherein when the second secondary control terminal has multiple operation frequency bands, searching for the synchronization data by the second secondary control terminal includes:
through a time-division manner, searching, by the second secondary control terminal, the synchronization data in each of the multiple operation frequency bands.

78. The system of any of claims 67-77, wherein the identifier of the first secondary control terminal is included in data header of the secondary control terminal data.

79. The system of any of claims 67-78, wherein:
the primary control terminal includes a primary remote controller of an unmanned aerial vehicle (UAV);
both the first secondary control terminal and the second secondary control terminal include a secondary remote controller of the UAV.

80. The system of claim 79, wherein the primary control terminal further includes:
primary user equipment, wherein an application program (APP) of the primary user equipment is used to control the UAV through the primary remote controller.

81. The system of claim 79 or 80, wherein the first secondary control terminal further includes:
first secondary user equipment, wherein an APP of the first secondary user equipment is used to control the UAV through the secondary remote controller.

82. The system of any of claims 79-81, wherein the second secondary control terminal further includes:
second secondary user equipment, wherein an APP of the second secondary user equipment is used to control the UAV through the secondary remote controller.
